# EUROPÄISCHE PATENTSCHRIFT

(11) **EP 0 602 643 B1**
(45) Veröffentlichungstag und Bekanntmachung des Hinweises auf die Patenterteilung: **23.02.2000**
(21) Anmeldenummer: 93120325.1
(22) Anmeldetag: 16.12.1993
(51) Int. Cl.: G06K 19/07, G07F 7/12, G07F 7/10

(54) **Verfahren und Datenträgeranordnung zur Echtheitserkennung von Speicherchips**
Method and data-carrier assembly for the verification of memory chips
Méthode et ensemble de support d'informations pour la reconnaissance de l'authenticité de la mémoire des puces

(30) Priorität: 16.12.1992 DE 4242579
(43) Veröffentlichungstag der Anmeldung: 22.06.1994
(73) Patentinhaber: SIEMENS AKTIENGESELLSCHAFT, 80333 München (DE)
(72) Erfinder: Schrenk, Hartmut, Dr. rer. nat., D-85540 Haar (DE)

(56) Entgegenhaltungen:
- EP-A- 0 283 238
- EP-A- 0 313 967
- EP-A- 0 321 728
- FR-A- 2 640 061

## Beschreibung

Die Erfindung betrifft ein Verfahren nach dem Oberbegriff des Patentanspruchs 1.

Zum bargeldlosen Bezahlung von Waren oder zum Abrechnen von Dienstleistungen und ähnlichem sind datengesteuerte Zahlungssysteme in Form von Datenaustauschsystemen bekannt, die beispielsweise in der EP-0 321 728 beschrieben sind.

Zur Echtheitserkennung von Speicherchips, insbesondere bei Verwendung in tragbaren Datenträgeranordnungen von Datenaustauschsystemen, kann zwischen Datenaustausch- und Kontrollbetrieb umgeschaltet werden, wobei insbesondere die Signallaufzeit der Kontrolldaten durch eine Bearbeitungsschaltung als Erkennungsmerkmal dient. Gemäß diesem Stand der Technik wird also als Erkennungsmerkmal eines autorisierten Kartenchips ein analog realisierter Datenverarbeitungs-Schaltungsteil beansprucht, dessen kurze Reaktionszeit über eine programmgesteuerte Simulationsschaltung schwer nachvollziehbar ist. Auch eine Hardwaresimulation ist durch ein derartiges Echtheitsmerkmal erheblich erschwert, kann aber beim heutigen Stand der Technik nicht ausgeschlossen werden.

Aus der EP 0313 967 A1, auf der Oberbegriff des Patentanspruchs 1 beruht, ist ein Verfahren zur Echtheitsprüfung eines Datenträgers mit intergriertem Schaltkreis bekannt, bei dem die unterschiedlichen Programmierzeiten verschiedener EEPROM-Speicherzellen gemessen und auf dem integrierten Schaltkreis gespeichert werden. Eine Überprüfung des integrierten Schaltkreises erfolgt nun dadurch, daß die Programmierzeiten zu einem beliebigen späteren Zeitpunkt nochmals gemessen werden und mit den abgespeicherten verglichen werden. Der integrierte Schaltkreis wird nur bei Übereinstimmung der Daten als echt erkannt.

Dieses Verfahren setzt jedoch voraus, daß mit vertretbarem Aufwand meßbare Unterschiede zwischen verschiedenen EEPROM-Zellen bestehen, was bei heute zur Verfügung stehenden Technologien immer weniger der Fall ist. Außerdem ändern die Zellen mit der Zeit ihre Eigenschaften, so daß echte Chips nach einigen Jahren als unecht betrachtet werden können.

Aufgabe der vorliegenden Erfindung ist es ein Verfahren zur Echtheitserkennung anzugeben, welches eine Hardwaresimulation weitgehend ausschließt.

Diese Aufgabe wird durch die Merkmale des Anspruchs 1 gelöst. Weiterbildungen der Erfindung sind in den Unteransprüchen angegeben.

Eine Hardwaresimulation von Kartenchips auf scheckkartengroßen Platinen, die ein Kartenleser nicht von echten Karten unterscheiden kann, muß sich auf standardmäßig verfügbare elektronische Bauteile und integrierte Schaltungen abstützen, sofern nicht eine eigenständige Chipentwicklung dahinter steht. Programmierbare integrierte Schaltungen wie z.B. PLA's, Gatearrays usw. lassen sich grundsätzlich an die Spezifikation einer Speicherchipkarte anpassen und können auch über E²-PROM- Speicherzellen verfügen.

Vorteil der Verwendung einer E²-PROM-Speicherzelle zur Echtheitserkennung ist, daß ein derartiges Einzelbauelement nicht marktgängig ist. Insbesondere ist kein derartiges Bauelement bekannt, dessen E²-PROM-Speicherzellen von außen analog meßbar zugänglich sind. Auch in eventuellen Hybridanordnungen sind derartige E²-PROM-Transistoren nicht im Handel erhältlich. Eine Chipkarte, die es dem Kartenleser erlaubt, über eine erfindungsgemäße Echtheitsprüflogik die analoge Verschiebung der Einsatzspannung von E²-PROM-Zellen unter variablen Prüfbedingungen meßbar zu machen, muß also entweder echt sein oder sie ist durch eine echte Chipentwicklung, z.B. durch Nachbau des Originalchips zustande gekommen. Im Normalfall ist aber eine derartige Chipentwicklung für einen nicht autorisierten Benutzer praktisch ausgeschlossen.

Die Erfindung wird nachfolgend anhand von drei Figuren näher erläutert. Es zeigen:
- Figur 1: ein Prinzipschaltbild einer erfindungsgemäßen Anordnung.
- Figur 2: den zeitlichen Verlauf der Einsatzspannung einer E²-PROM-Speicherzelle.
- Figur 3: die Abhängigkeit der Drainspannung einer E²-Speicherzelle bei einem erfindungsgemäßen Prüfverfahren.

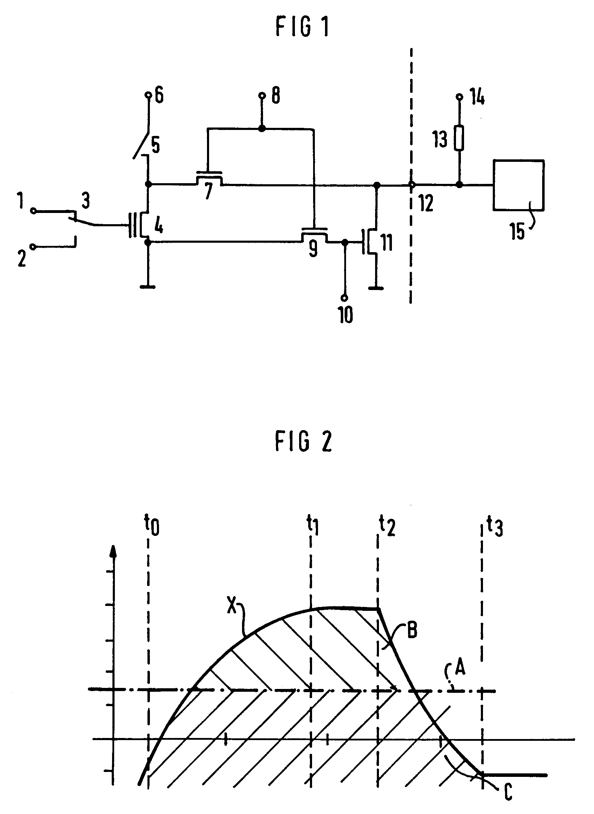

Figur 1 zeigt zwei interne Anschlußklemmen 1, 2 des tragbaren Datenträgers, welche über einen Schalter 3 mit dem Gate einer E²-PROM-Speicherzelle 4 verbunden sind. An der Anschlußklemme 1 kann dabei z.B. die Programmierspannung Upp und an der Anschlußklemme 2 z.B. die Löschspannung anliegen. An einer weiteren Anschlußklemme 6 ist ebenfalls die Programmierspannung Uₚₚ abgreifbar, welche über einen Schalter 5 mit dem Drainanschluß der E²-Speicherzelle 4 verbunden ist. Der Sourceanschluß der E²-PROM-Speicherzelle ist mit Masse verbunden. Über die Laststrecke eines MOSFET 7 ist der Drainanschluß der E²-PROM-Speicherzelle 4 mit einer von außen zugänglichen Anschlußklemme 12 verbunden. Die Trennung zwischen Speicherchipkarte und der Außenwelt ist durch die gestrichelte Linie angedeutet. Der Gateanschluß des MOSFET 7 ist mit einer internen Anschlußklemme 8 verbunden. Bei der externen Anschlußklemme 12 kann es sich z.B. um einen Datenausgang handeln. Mit 11 ist beispielsweise eine Datenausgangsstufe schematisch dargestellt. Diese besteht aus dem MOSFET 11, dessen Laststrecke zwischen Anschlußklemme 12 und Masse geschaltet ist. Der Gateanschluß des MOSFET 11 ist mit einer internen Anschlußklemme 10 verbunden, an welche z.B. ein Datensignal anlegbar ist. Weiterhin ist ein MOSFET 9 vorgesehen, dessen Laststrecke zwischen Masse und Gateanschluß des MOSFET 11 geschaltet ist. Der Gateanschluß des MOSFET 9 ist ebenfalls mit der internen Anschlußklemme 8 verbunden. Mit 15 ist die externe Datenein-/Datenausgabeeinrichtung bezeichnet. Mit 13 ist ein Pull-up-Widerstand dargestellt, der zwischen einer Versorgungsspannungsklemme 14 und der Anschlußklemme 12 extern geschaltet ist. Dieser ist meistens in der externen Schreib-/Lesestation integriert.

In Figur 2 ist prinzipiell der zeitliche Verlauf der Einsatzspannung nach einem Programmiervorgang mit X dargestellt. Zum Zeitpunkt t0 sei angenommen, daß die E²-Speicherzelle programmiert ist. Während der Zeitdauer t0 bis t1 wird dann die Speicherzelle gelöscht. Während des Zeitpunkts t1 bis t2 befindet sich die Speicherzelle im gelöschten Zustand. Während des Zeitpunkts t2 bis t3 wiederum wird die Speicherzelle geschrieben. Mit A ist die Bewertungsspannungsschwelle bezeichnet. Die Abzisse zeigt den zeitlichen Verlauf und die Ordinate den Wert der Einsatzspannung. Der schraffierte Bereich B zeigt den Bereich in dem die E²-PROM-Speicherzelle gelöscht ist und der Bereich C denjenigen Bereich innerhalb dessen die E²-PROM-Speicherzelle programmiert ist. Der Programmierzustand einer E²-PROM-Speicherzelle vom Floating-Gatetyp, d.h. die Einsatzspannung nach einem Programmiervorgang, hat also eine exponentielle Abhängigkeit von der Programmierzeit. Diese wird durch den feldunterstützten Tunnelstrom bewirkt. Solche Kurven können sich durch Verschiebung von Fertigungsparametern, durch unterschiedlichen Aufbau der Speicherezellen oder unterschiedliche Prozeßführung verschieben, versteilern oder abflachen. Der grundsätzliche Zusammenhang bleibt jedoch bei fast allen E²-PROM-Zellen erhalten. Die Leitfähigkeit der Speicherzellen läßt sich im Bereich kurzer Programmierdauern durch vergleichsweise geringe Programmierdauerunterschiede stets charakteristisch verändern.

Durch die erfindungsgemäße Anordnung gemäß Figur 1 läßt sich diese Charakteristik von außen ermitteln und bewerten. Liegt am Anschluß 8 ein logisches "0"-Signal an, so sperren die MOSFETs 7 und 9. Dies ist der Normalzustand des Datenträgers in der keine Echheitsprüfung stattfindet. In dieser Zeit kann aber auch die Einsatzspannung der erfindungsgemäßen E²-PROM-Zelle durch Anlegen geeigneter Programmierspannungen graduell verschoben werden.

Liegt dagegen am Anschluß 8 eine logische "1" an, so kann die Bewertung innerhalb der Echtheitsprüfung durchgeführt werden. Durch eine logische "1" am Anschluß 8 wird der MOSFET 9 leitend und MOSFET 11 sperrend. Dadurch kann keine Datenübertragung mehr stattfinden. Hingegen wird ebenfalls MOSFET 7 leitend und der Drainanschluß des E²-PROM-Speicherzelle 4 wird mit dem externen Anschluß 12 verbunden. Nun kann der Programmierzustand der E²-PROM-Speicherzelle 4 über die Drainspannung der E²-PROM-Speicherzelle 4 durch die externe Datenein-/ausgabe 15 ermittelt werden. Die benötigten Steuermittel innerhalb des Datenträgers zum Programmieren bzw. Löschen der E²-PROM-Speicherzelle sind nicht dargestellt.

Zum Programmieren wird über den steuerbaren Schalter 3 die Klemme 2 und damit Masse an das Gate der E²-PROM-Speicherzelle 4 gelegt. Zusätzlich schaltet der steuerbare Schalter 5 die Programmierspannung Uₚₚ an den Drainanschluß. Zum Löschen wird über den Schalter 3 die Programmierspannung Uₚₚ von Klemme 1 an das Gate gelegt und der steuerbare Schalter 5 geöffnet, so daß OV am Drain der E²-PROM-Speicherzelle anliegen. Bei der Echtheitsprüfung wird der Schalter 5 geöffnet und eine Gatespannung zwischen 0 und 3 Volt angelegt.

Eine Echtheitsprüfung kann beispielsweise vom geschriebenen Zustand der Speicherzelle ausgehen, für den extern eine Drainspannung nahe 0 Volt feststellbar ist. Wird für eine bestimmte Dauer die E²-PROM-Zelle 4 gelöscht, so ergibt sich je nach Dauer des Löschvorgangs eine charakteristische Drainspannung, welche durch die Datenein-/ausgabevorrichtung 15 gemessen werden kann. Die Abhängigkeit von der Programmierdauer läßt sich einfach überprüfen, wenn man die Gesamtdauer in kurze Einzelimpulse von z.B. 10 bis 100 µs Dauer unterteilt und in den Pausen den jeweiligen Spannungspegel an einem externen Lastwiderstand 13 in Reihe zur E²-PROM-Zelle 4 abgreift. Wenn nach einigen Löschimpulsen sich die Einsatzspannung der E²-PROM-Zelle 4 der Gate-Lesespannung annähert, wird sich in entsprechend der Stromspannungscharakteristik und dem Lastwiderstand 13 die Drainspannung leicht meßbar durch die Triggerschwelle der Bewertungslogik in der Datenein-/ausgabeeinrichtung 15 verschieben.

Weist diese Datenein-/ausgabeeinrichtung 15 einen AD-Wandler auf, so kann eine Spannungsveränderung als Eigenschaft der Speicherzelle 4 auch unmittelbar festgestellt werden. Zwischenpegel bzw. fließend veränderbare Impulsanzahlen bei Veränderung der Einzelimpulsdauer sind Kriterien dafür, daß der geprüfte Datenträger tatsächlich spezifisch für diese Prüfung, d.h. für diese Anwendung bereitgestellt wurde und damit echt ist. Unterschiedliche aber dennoch "echte" Datenträger können bei gegebener Impulsdauer von z.B. 10 µs bereits nach wenigen Impulsen oder aber auch überhaupt nicht reagieren, beispielsweise wenn die interne Programmierspannung durch interne Impulsformung eine große Anstiegsdauer als Totzeit hat.

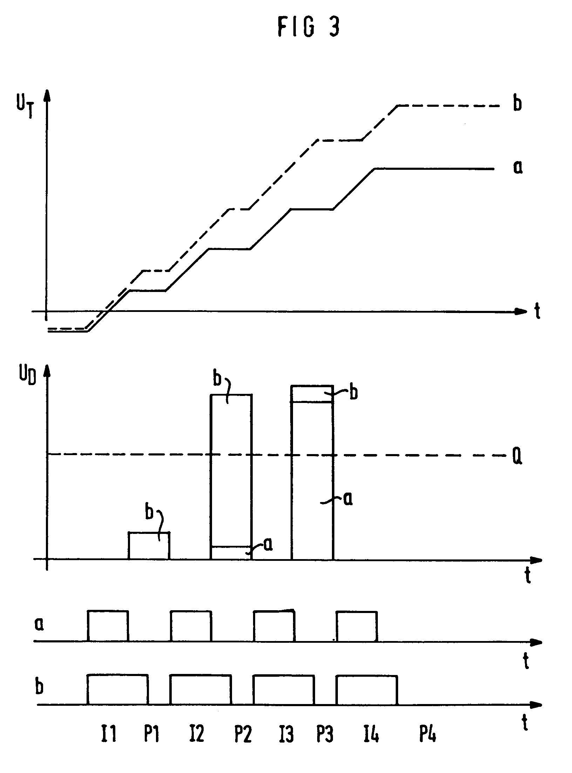

Figur 3 verdeutlicht einen erfindungsgemäßen Vorgang des Verfahrens. Die vier übereinander dargestellten Teilfiguren zeigen Verläufe der Einsatzspannung UT und der Drainspannung UD in Abhängigkeit von kurzen Impulsen a bzw. längeren Impulsen b. Für alle Teilfiguren gilt die gleiche Zeitachse t, d.h. daß der zeitliche Verlauf der vier dargestellten Teilfiguren in vertikaler Richtung übereinstimmt. In den unteren beiden Teilfiguren sind symbolisch mit a kurze Impulse und in der untersten Teilfigur mit b längere Impulse jeweils mit I1, I2, I3, I4 dargestellt. Mit P1, P2, P3, P4 sind die Intervallpausen zwischen den Programmierimpulsen bezeichnet. In der obersten Teilfigur ist die Abhängigkeit der Einsatzspannung der E²-PROM-Speicherzelle 4 mit der durchgezogenen Kurve für die kurzen Programmierimpulse a dargestellt und mit der gestrichelten Kurve der zeitliche Verlauf der Einsatzspannung für den Fall, daß eine Programmierimpulsfolge gemäß der untersten Teilfigur b verwendet wird. In der mittleren Figur ist anhand von Balkendiagrammen der Wert der Drainspannung, der in den Programmierpausen P1, P2, P3 ermittelbar ist, dargestellt. Mit der gestrichelten Linie ist eine Schwelle Q bezeichnet. Diese kann z.B. das Entscheidungskriterium für eine logische "0" oder eine logische "1" darstellen. Wie in der mittleren Teilfigur zu sehen ist, wächst bei Verwendung der längeren Impulsfolge b die zugehörige Drainspannung U_{D} zwischen den ersten beiden Impulsfolgen sehr schnell an, wohingegen zwischen dem zweiten und dritten Programmierimpuls die Veränderung der Drainspannung U_{D} nur noch gering ist. Demgegenüber ist das Verhalten bei Wahl einer kürzeren Programmierimpulsfolge mit dem mit a bezeichneten Balken dargestellt. Dieses stellt hier in etwa den umgekehrten Vorgang dar. Zwischen erstem und drittem Programmierimpuls ist hier eine relativ schwache Änderung festzustellen wohingegen nach dem dritten Programmierimpuls ein starker Anstieg der Drainspannung zu verzeichnen ist. Für die Erfindung ist wesentlich, daß die analoge Veränderung des Programmierzustandes der Speicherzelle auf einfache Weise durch Zählen der Programmierimpulse also quasi digital gemessen wird.

Zusätzlich könnte in einer Weiterbildung der Erfindung ein AD-Wandler direkt zwischen Speicherzelle und Datenausgang auf dem Datenträger vorgesehen werden. Die Wandlung der charakteristischen Größe würde dann bereits auf dem Datenträger erfolgen. Ebenso könnte ein Zähler zum Zählen der Programmierimpulse auf dem Datenträger vorgesehen sein. Um ein großes Spektrum unterschiedlicher Datenträger auf Veränderbarkeit eines Programmierzustandes zu kontrollieren ist es zweckmäßig, die Einzelimpulsdauer innerhalb der Pulsfolge während eines Testlaufes fortlaufend zu erhöhen, um "schnelle" und "langsame" Datenträger zu erfassen.

Auf diese Weise sollte es immer möglich sein, Lösch- oder Schreibvorgänge mit einem einzigen Prüfdurchlauf in einem vorgegebenen Fenster der Gesamtprüfdauer durch analoge Abhängigkeit von Anzahl und Dauer der erforderlichen Programmierimpulse als E²-PROM spezifisch zu verfizieren. Es ist jedoch nicht ganz auszuschließen, daß ein Betrüger versucht, diese analoge Spannungsverschiebung auch ohne Verwendung von E²-PROM-Zellen, z.B. über einen Digital-Analog-Wandler zu simmulieren. Solche Simmulationen lassen sich jedoch vom Terminal, d.h. von der Datenschreib/leseeinrichtung durch Vorkehrungen unterscheiden:
a) Die Bewertungsspannung am Gate der E²-PROM-Zelle wird während des Echtheitstest charakteristisch abhängig von der Versorgungsspannung gemacht und damit das Ausgangssignal über die Versorgungsspannung auf eine Weise beeinflußt, die in einer Simmulation weitere Probleme bereiten würde.
b) Durch kurzfristiges Abschalten der Versorgungsspannung geht die jeweilige Analogausgabe in einem Digital-Analog-Wandler in der Regel verloren, jedoch bei der erfindungsgemäßen E²-PROM-Speicherzelle nicht.
c) Falls die Simmulation jedoch eine eigene Batterie besitzen sollte, wird wiederum die Spannungsabhängigkeit besonders schwer zu realisieren sein.
d) Statt dem Abschalten der Versorgungsspannung kommen auch RESET-Vorgänge, die zwischen die einzelnen Programmierimpulse eingefügt sind, als Störung einer analogen Simmulation in Frage.
e) Durch Vermischung von Schreib- und Löschimpulsen läßt sich bei der Bewertung ein iteratives Verhalten feststellen, das nur durch eine E²-PROM-Zelle zustande kommt.

Als weitere E²-PROM spezifische, analoge Testmöglichkeit kommt natürlich auch die definierte Änderung der Programmierspannung und ihr charakteristischer Einfluß auf die Programmierkurven in Frage.

Sollte ein nicht autorisierter Benutzer jedoch eine legale, d.h. echte Chipkarte nur für den Vorgang der Echtheitsprüfung verwenden und dann auf eine betrügerische umschalten, so kann in einer Weiterbildung der Erfindung die von der Datenein-/ausgabeeinrichtung meßbaren, vom Programmierzustand abhängigen Strom-Spannungskennlinien der E²-PROM-Speicherzelle noch über die im Datenspeicher stehenden Daten beeinflußbar sein, so daß bei Änderung des Dateninhalts im Speicher des tragbaren Datenträgers sich auch das analog gemessene Echtheitsmerkmal charakteristisch ändert. In einer praktischen Ausführungsform könnte beispielsweise jeweils vor Ausführung des Echtheitstests ein spezielles digitales Rechenwerk über einen einfachen Algorithmus vorgeladen werden. Dies könnte z.B. ein Exklusiv-ODER-Netzwerk bzw. ein kurzes rückgekoppeltes Schieberegister sein. Mit den Ausgangszuständen dieser Digitalschaltung ließe sich ein Netzwerk innerhalb des Echtheitsmerkmals in der Weise verändern, daß entweder der Programmiervorgang selbst charakteristisch beeinflußt, d.h. verlangsamt oder beschleunigt wird oder aber die Speicherzelle bei unververänderten Programmierablauf mit unterschiedlichen Strom-Spannungskennlinien bewertet wird. Der Programmiervorgang einer E²-PROM-Speicherzelle kann beispielsweise durch Änderung der Programmierspannung oder durch Veränderung einer Totzeit, d.h. der Anstiegszeitkonstante der Programmierimpulse, beschleunigt oder verlangsamt werden. Die Bewertung ist durch Änderung des Lesepegels oder durch Zu- bzw. Wegschalten von seriellen oder parallelen Strompfaden zur E²-PROM-Zelle zu beeinflussen. Anstelle einer E²-PROM-Speicherzelle deren Drainspannung bei der Echtheitsprüfung ermittelt wird, können natürlich auch andere Speicherzellen oder integrierbare Bauelemente verwendet werden, die eine charakteristische analoge Kenngröße aufweisen, die schwer z.B. durch DA-Wandler simuliert werden kann.

## Patentansprüche

1. Verfahren zur Echtheitserkennung einer zu einem Datenaustauschsystem gehörenden tragbaren Datenträgeranordnung, die zumindest eine einen nichtflüchtigen Speicher und dessen Steuer- und Adressierschaltung bildende integrierte Schaltung enthält, wobei bei dem Datenaustauschsystem mittels einer Datenein-/ausgabeinrichtung (15) Daten aus der Datenträgeranordnung lesbar bzw. in diese einschreibbar sind, wobei die Datenein-/ausgabeeinrichtung (15) zur Versorgung der Datenträgeranordnung mit Betriebs- und Steuersignalen ausgebildet ist, wobei zur Echtheitserkennung der Datenträgeranordnung eine analoge veränderbare physikalische Kenngröße eines integrierten Bauelementes von der Datenein/ausgabeeinrichtung (15) gemessen und ausgewertet wird,
**dadurch gekennzeichnet,**
daß das integrierte Bauelement ein zusätzliches Bauelement (4) ist und
daß während des Meßvorgangs eine der Betriebsspannungen des zusätzlichen Bauelementes (4) verändert wird.

2. Verfahren nach Anspruch 1,
**dadurch gekennzeichnet,** daß das zusätzliche Bauelement (4) eine E²-PROM-Speicherzelle ist und daß deren Drainspannung durch die Datenein-/ausgabeeinrichtung (15) ermittelt wird.

3. Verfahren nach Anspruch 2,
**dadurch gekennzeichnet,** daß die EEPROM-Speicherzelle (4) durch kurze Einzelimpulse gelöscht bzw. geschrieben wird und während der Lösch- bzw. Schreibpausen die Drainspannung ermittelt wird.

4. Verfahren nach Anspruch 3,
**dadurch gekennzeichnet,** daß die Impulsdauer während des Löschens bzw. Schreibens der Speicherzelle (4) kontinuierlich erhöht wird.

5. Verfahren nach einem der vorhergehenden Ansprüche,
**dadurch gekennzeichnet,** daß während der Echtheitserkennung die Versorgungsspannung geändert wird.

6. Verfahren nach einem der vorhergenden Ansprüche,
**dadurch gekennzeichnet,** daß während der Echtheitserkennung die integrierte Schaltung des tragbaren Datenträgers durch die Datenein-/ausgabeeinrichtung (15) zurückgesetzt wird.

7. Verfahren nach einem der Ansprüche 3 bis 6,
**dadurch gekennzeichnet,** daß abwechselnd ein Schreib- bzw. Löschimpuls auf die Speicherzelle (4) aufgegeben wird.

8. Verfahren nach einem der vorhergehenden Ansprüche, **dadurch gekennzeichnet,** daß während der Echtheitserkennung die Programmierspannung verändert wird.

## Claims

1. Method for checking the authenticity of a portable data carrier assembly which is associated with a data exchange system and which contains at least one integrated circuit which forms a nonvolatile memory and its control and address circuitry, it being possible to read data out of the data carrier array, and write data to it, in the data exchange system using a data input/output device (15), the data input/output device (15) being designed to supply the data carrier assembly with operating signals and control signals, an analogue physical characteristic variable of an integrated component being measured and evaluated by the data input/output device (15) in order to check the authenticity of the data carrier assembly, characterized in that the integrated component is an additional component (4), and in that one of the operating voltages of the additional element (4) is varied during the measurement process.

2. Method according to Claim 1, characterized in that the additional component (4) is an E² PROM memory cell, and that its drain voltage is determined by the data input/output device (15).

3. Method according to Claim 2, characterized in that the EEPROM memory cell (4) is cleared or written to by means of short individual pulses, and the drain voltage is determined during the intervals between clearing and writing, respectively.

4. Method according to Claim 3, characterized in that the pulse length is increased continuously while the memory cell (4) is being cleared or written to.

5. Method according to one of the preceding claims, characterized in that the supply voltage is varied during the authenticity checking.

6. Method according to one of the preceding claims, characterized in that the integrated circuit of the portable data carrier is reset by the data input/output device (15) during the authenticity checking.

7. Method according to one of Claims 3 to 6, characterized in that a writing pulse or clearing pulse is alternately transmitted to the memory cell (4).

8. Method according to one of the preceding claims, characterized in that the programming voltage is varied during the authenticity checking.

## Revendications

1. Procédé pour reconnaître l'authenticité d'un dispositif support de données, portable et faisant partie d'un système d'échange de données, comportant au moins un circuit intégré formant une mémoire non volatile et son circuit de commande et d'adressage, des données pouvant, dans le système d'échange de données, être, au moyen d'un dispositif (15) d'entrée-sortie de données, lues sur le dispositif support de données et écrites sur ce dernier, le dispositif (15) d'entrée-sortie de données étant conçu pour alimenter le dispositif support de données en signaux de service et de commande, une valeur caractéristique, physique, variable et analogique d'un composant intégré étant, pour la reconnaissance de l'authenticité du dispositif support de données, mesurée et analysée par le dispositif (15) d'entrée-sortie de données,
**caractérisé par le fait**
que le composant intégré est un composant supplémentaire (4) et
que, pendant le processus de mesure, une des tensions de service du composant supplémentaire (4) est modifiée.

2. Procédé selon la revendication 1
**caractérisé par le fait**
que le composant supplémentaire (4) est une cellule de mémoire E²-PROM et que sa tension de drain est déterminée par le dispositif (15) d'entrée-sortie de données.

3. Procédé selon la revendication 2
**caractérisé par le fait**
que la cellule de mémoire EEPROM (4) est effacée et écrite au moyen de courtes impulsions individuelles et que la tension de drain est déterminée pendant les pauses d'effacement et d'écriture.

4. Procédé selon la revendication 3
**caractérisé par le fait**
que la longueur des impulsions est augmentée d'une façon continue pendant l'effacement et l'écriture de la cellule de mémoire (4).

5. Procédé selon l'une des revendications précédentes
**caractérisé par le fait**
que, pendant la reconnaissance d'authenticité, la tension d'alimentation est modifiée.

6. Procédé selon l'une des revendications précédentes
**caractérisé par le fait**
que, pendant la reconnaissance d'authenticité, le circuit intégré du support de données portables est remis à zéro par le dispositif (15) d'entrée-sortie de données.

7. Procédé selon l'une des revendications 3 à 6
**caractérisé par le fait**
qu'une impulsion d'écriture et une impulsion d'effacement sont envoyées alternativement sur la cellule de mémoire (4).

8. Procédé selon l'une des revendications précédentes
**caractérisé par le fait**
que, pendant la reconnaissance d'authenticité, la tension de programmation est modifiée.
